(19) Europäisches Patentamt / European Patent Office / Office européen des brevets

(11) **EP 4 495 445 B1**

(12) **EUROPEAN PATENT SPECIFICATION**

(45) Date of publication and mention
of the grant of the patent:
**25.03.2026  Bulletin 2026/13**

(21) Application number: **23770143.8**

(22) Date of filing: **01.02.2023**

(51) International Patent Classification (IPC):
**F16C 19/26** *(2006.01)*        **F16C 33/46** *(2006.01)*

(52) Cooperative Patent Classification (CPC):
**F16C 33/4676; F16C 33/6681;** F16C 19/26;
F16C 2208/02; F16C 2220/04; F16C 2240/30;
F16C 2300/22; F16C 2322/39

(86) International application number:
**PCT/JP2023/003294**

(87) International publication number:
**WO 2023/176181 (21.09.2023 Gazette 2023/38)**

(54) **CAGE FOR ROLLING BEARING, ROLLING BEARING, AND METHOD OF DESIGNING CAGE FOR ROLLING BEARING**

KÄFIG FÜR WÄLZLAGER, WÄLZLAGER UND VERFAHREN ZUM ENTWURF DES KÄFIGS FÜR WÄLZLAGER

CAGE POUR PALIER À ROULEMENT, PALIER À ROULEMENT ET PROCÉDÉ DE CONCEPTION D'UNE CAGE POUR PALIER À ROULEMENT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **18.03.2022  JP 2022044005**

(43) Date of publication of application:
**22.01.2025  Bulletin 2025/04**

(73) Proprietor: **NSK Ltd.
Tokyo 141-8560 (JP)**

(72) Inventor: **SOGA Shuji
Fujisawa-shi, Kanagawa 251-8501 (JP)**

(74) Representative: **Grünecker Patent- und
Rechtsanwälte
PartG mbB
Leopoldstraße 4
80802 München (DE)**

(56) References cited:
JP-A- 2013 053 734     JP-A- 2019 116 976
JP-A- 2019 116 976     JP-A- 2021 181 835

## Description

TECHNICAL FIELD

The present invention relates to a rolling bearing cage, a rolling bearing, and a method of designing a rolling bearing cage.

BACKGROUND ART

A main shaft of a machine tool thermally expands in an axial direction due to heat generated by a bearing and a motor during operation, and a front bearing and a rear bearing are stretched, resulting in excessive axial load and risk of bearing damage. In order to prevent this problem, a cylindrical roller bearing having a sliding function may be used as the rear bearing. The main shaft of the machine tool is often operated at high-speed rotation, and the cylindrical roller bearing may develop a negative radial clearance due to an influence of centrifugal force or heat during operation. Normally, when there is a negative radial balance, lead or lag occurs due to a difference between roller diameters, fast rollers and slow rollers compete with each other via a column portion of a cage, causing repeated loads to be applied from rollers to the column portion of the cage. The cage itself may move in a radial direction due to self-excited vibration of the cage, the roller being pressed against the cage due to lead or lag of the roller, or a centrifugal force caused by a shift in a center of gravity of the cage, which may increase a load applied by the roller to the cage. Further, depending on a guide method and a shape of the cage, the cage may be damaged by a load applied from the roller to the cage.

The cage includes a bearing ring guide cage and a rolling element guide cage according to a guide method.

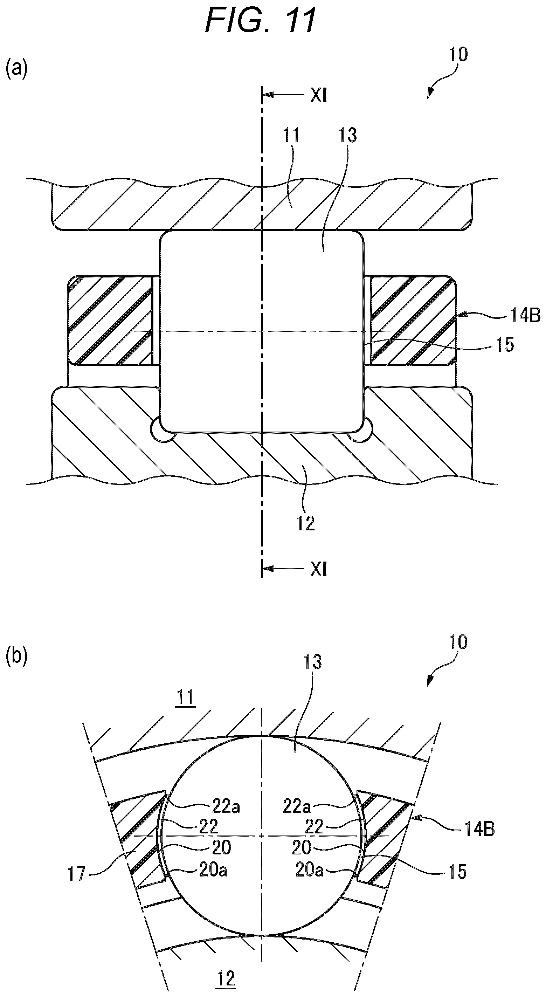

In a rolling bearing 10 shown in Fig. 11, a rolling element guide cage 14B is restricted in movement in a radial direction by a rolling element 13. The rolling element 13 comes into contact with a tip end portion 20a of an inner holding portion 20 provided on an inner diameter side of a column portion 17 or a tip end portion 22a of an outer holding portion 22 provided on an outer diameter side, thereby restricting movement of the cage 14B in the radial direction.

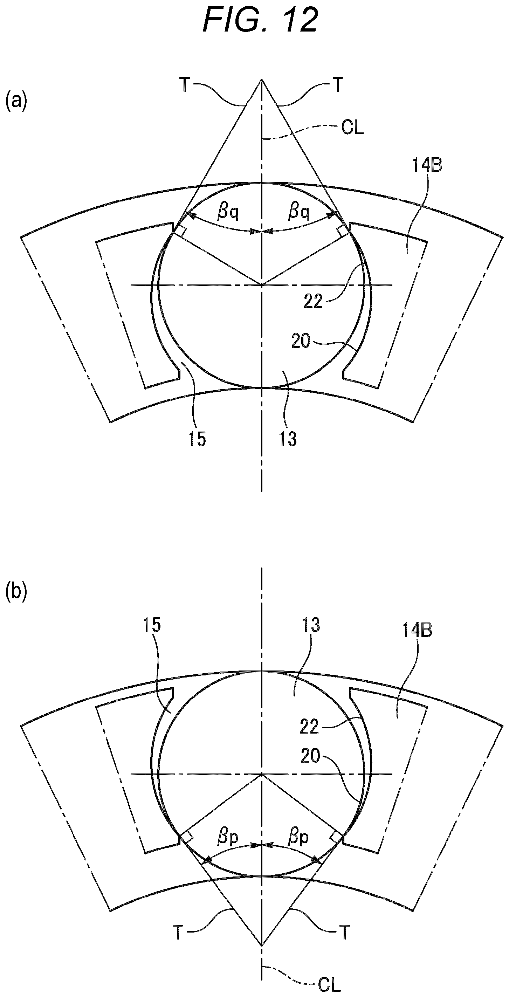

In the rolling element guide cage 14B, as shown in Fig. 12, when the cage 14B moves in the radial direction, the rolling element 13 may come into contact with a holding portion (the inner holding portion 20 and the outer holding portion 22) and engage with the holding portion in a wedge shape in a specific single pocket 15, and smooth rotation may be prevented.

Therefore, in general, a wedge in the single pocket 15 is designed such that wedge angles $\beta_p$ and $\beta_q$ are as large as possible, and even when the cage 14B moves in the radial direction, it is difficult for the rolling element 13 to engage with the holding portions 20 and 22.

The wedge angles $\beta_p$ and $\beta_q$ are angles formed by a tangent T to an outer circumference of the rolling element 13 at a contact point between the rolling element 13 and the holding portion and a line CL connecting a center of the rolling element 13 and a center of the cage 14B.

Patent Literature 1 discloses a cylindrical roller bearing including a cage of a rolling element guide type that prevents a wedge action of a column portion of the cage in the cylindrical roller bearing, by setting an angle formed by a line segment connecting a point where the column portion of the cage comes into contact with a cylindrical roller and a roller center and a line connecting the roller center and a cage center and extending in a radial direction, in a range of 60° or more and 72° or less.

Patent Literature 2 discloses a rolling bearing cage in which an angle formed by an imaginary line passing through a contact point between a rolling element and a tapered surface and a center of the rolling element and an imaginary perpendicular plane passing through the center of the rolling element and perpendicular to a radial direction is set to be larger than a friction angle set based on a friction coefficient at the contact point between the rolling element and the tapered surface, and in a specific single rolling element and a pocket in which the rolling element is accommodated, it is possible to avoid edge contact between the rolling element and a pocket surface and engagement in a wedge shape.

JP 2019-116 976A discloses a rolling bearing cage according to the preamble of claim 1 and a method of designing a rolling bearing cage according to the preamble of claim 8.

CITATION LIST

PATENT LITERATURE

Patent Literature 1: JP2005-069282A
Patent Literature 2: JP5870563B2

SUMMARY OF INVENTION

TECHNICAL PROBLEM

The wedge action between the cage and the rolling element may occur not only in a single pocket but also between two pockets having different phases due to movement of the cage in the radial direction, lead or lag of the rolling element (roller), and the like.

The rolling bearing cage and the cylindrical roller bearing disclosed in Patent Literature 1 and Patent Literature 2 both deal with a problem of wedging in a single pocket, and do not refer to engagement of a roller due to a wedge action generated between two different pockets (not only adjacent pockets but also separate pockets) due to lead, lag, and the like of a rolling element (roller).

The present invention has been made in view of the above-described problem, and an object of the present invention is to provide a rolling bearing cage, a rolling bearing, and a method of designing a rolling bearing cage, which are capable of preventing damage to a column portion of the cage due to a wedge action formed between two pockets having different phases, and also preventing damage to the column portion of the cage due to a wedge action formed in a single pocket.

SOLUTION TO PROBLEM

The above object of the present invention is achieved by a rolling bearing cage according to claim 1, a rolling bearing comprising the rolling bearing cage according to any one of claims 1-5, and a method of designing a rolling bearing cage according to claim 8.

ADVANTAGEOUS EFFECTS OF INVENTION

According to the rolling bearing cage, the rolling bearing, and the method of designing a rolling bearing cage of the present invention, it is possible to prevent damage to a column portion of the cage due to a wedge action formed between two pockets having different phases, and it is also possible to prevent damage to the column portion of the cage due to a wedge action formed in a single pocket.

BRIEF DESCRIPTION OF DRAWINGS

[Fig. 1] (a) of Fig. 1 is a cross-sectional view of a rolling bearing having an internally held cage according to a first embodiment of the present invention, and (b) of Fig. 1 is a cross-sectional view taken along line I-I in (a) of Fig. 1.
[Fig. 2] Fig. 2 is a schematic cross-sectional view showing wedge angles between pockets of the cage shown in Fig. 1 spaced apart from each other in a circumferential direction due to internal holding.
[Fig. 3] (a) of Fig. 3 is a graph showing a relationship between a wedge angle and a load, and (b) of Fig. 3 is a schematic view showing a relationship between a wedge angle and a force.
[Fig. 4] (a) of Fig. 4 is a graph showing a relationship between a friction coefficient and a wedge angle, and (b) is a table showing the relationship between the friction coefficient and the wedge angle.
[Fig. 5] (a) of Fig. 5 is a view showing a positional relationship between a pocket and a rolling element in the related art, and (b) of Fig. 5 is a view showing a positional relationship between a pocket and a rolling element in a reference example.
[Fig. 6] Fig. 6 is a cross-sectional view of a rolling bearing having an externally held cage according to a second embodiment of the present invention.

[Fig. 7] Fig. 7 is a schematic cross-sectional view showing wedge angles between pockets of the cage shown in Fig. 6 spaced apart from each other in the circumferential direction due to external holding.
[Fig. 8] Fig. 8 is a schematic cross-sectional view of a rolling bearing having both-held cages according to a third embodiment of the present invention.
[Fig. 9] (a) of Fig. 9 is a cross-sectional view of a both-held cage formed of a single arc, (b) of Fig. 9 is a cross-sectional view of the both-held cage in which an outer holding portion and an inner holding portion are connected by a common tangent, (c) of Fig. 9 is a cross-sectional view of the both-held cage in which the outer holding portion and the inner holding portion are connected by a straight line, and (d) of Fig. 9 is a cross-sectional view of the both-held cage in which the outer holding portion and the inner holding portion intersect at an intersection point.
[Fig. 10] (a) to (c) of Fig. 10 are schematic views showing tip end portions of the holding portions.
[Fig. 11] (a) of Fig. 11 is a cross-sectional view of a rolling bearing including a rolling element guide cage in the related art, and (b) of Fig. 11 is a cross-sectional view taken along line XI-XI in (a) of Fig. 11.
[Fig. 12] (a) of Fig. 12 is a side view showing an angle of an externally held wedge in a single pocket, and (b) of Fig. 12 is a side view showing an angle of an internally held wedge in a single pocket.

DESCRIPTION OF EMBODIMENTS

Hereinafter, a rolling bearing cage according to each embodiment of the present invention and a rolling bearing including the rolling bearing cage will be described in detail with reference to the drawings.

(First Embodiment)

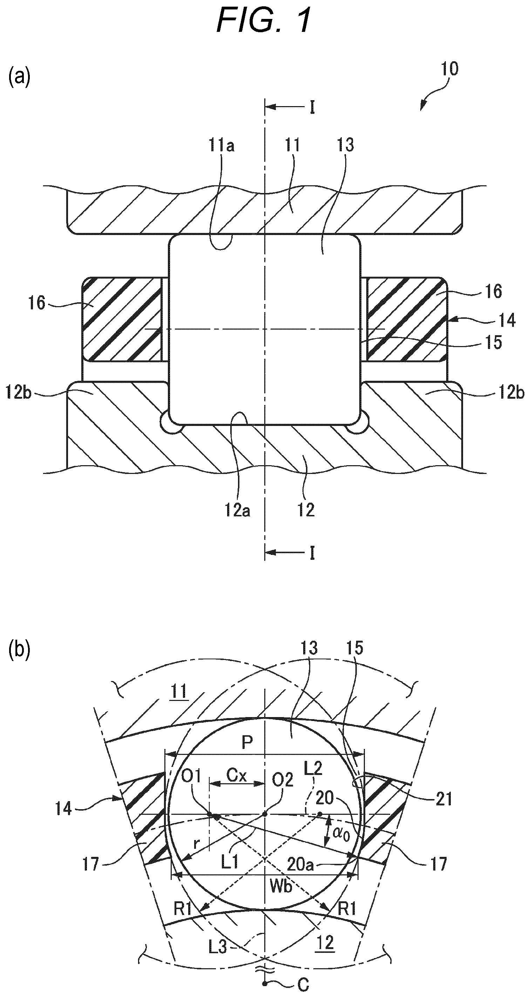

As shown in (a) and (b) in Fig. 1, a rolling bearing 10 according to the present embodiment includes an outer ring 11 having an outer ring raceway 11a formed on an inner circumferential surface thereof, an inner ring 12 having an inner ring raceway 12a formed on an outer circumferential surface thereof, cylindrical rollers 13 which are a plurality of rolling elements disposed between the outer ring raceway 11a and the inner ring raceway 12a, and a cage 14 having a plurality of pockets 15 for holding the plurality of cylindrical rollers 13 in a rollable manner.
The inner ring 12 includes annular flange portions 12b protruding to an outer diameter side on both sides in an axial direction, and restricts movement of the cylindrical roller 13 in the axial direction.
In the present embodiment, the outer ring 11, the inner ring 12, and the cylindrical roller 13 are made of iron, and the cage 14 is made of synthetic resin.
Examples of the synthetic resin material used for the cage 14 include phenol resin containing a basic material. As the basic material, paper, cotton fabric, asbestos fabric, glass fiber fabric and nylon fabric may be used for a laminated plate, and wood powder, cotton, pulp, asbestos, mica, glass fiber, or the like may be used for a molded product. Resin such as polyamide, polyacetal, polyether ether ketone, polyimide, or polyphenylene sulfide may be used, and a reinforcing material such as glass fiber, carbon fiber, or aramid fiber may be added as necessary. Further, the cage 14 may be made of a copper alloy or iron plated with silver or the like.

The cage 14 includes a pair of annular portions 16 formed on both sides in the axial direction, and a plurality of column portions 17 connecting the pair of annular portions 16 in the axial direction and formed at predetermined intervals in a circumferential direction. The pocket 15 is formed between the pair of annular portions 16 and adjacent column portions 17.

As shown in (b) of Fig. 1, the cage 14 is an internally held rolling element guide cage, and side surfaces of the column portions 17 opposed to each other in the circumferential direction have an inner holding portion 20 that is curved toward an inner diameter side of the pocket 15, and outer diameter sides from the inner holding portion 20 are planes 21 parallel to each other. The inner holding portion 20 may be formed over the entire pocket 15 in the axial direction, or may be divided in the axial direction and formed symmetrically.

Accordingly, when the cage 14 and the cylindrical roller 13 move relative to each other in a radial direction, the cage 14 does not come into contact with the outer ring 11 and the inner ring 12, and a tip end portions 20a of the inner holding portion 20 come into contact with the cylindrical roller 13, thereby restricting movement of the cage 14 in the radial direction. That is, when the cage 14 is moved upward from a state shown in the drawing, the inner holding portion 20 abuts against the cylindrical roller 13 and the movement is restricted. When the cage 14 is moved downward, the inner holding portion 20 on an opposite side by 180° comes into contact with the cylindrical roller 13 and the movement is restricted.

When a cross section of the cage 14 is viewed in the axial direction, the inner holding portion 20 is formed with a radius of curvature $R_1$ larger than a radius r of the cylindrical roller 13, and the inner holding portions 20 opposed to each other in the circumferential direction form a Gothic arch shape by extending and intersecting arcs of each other.

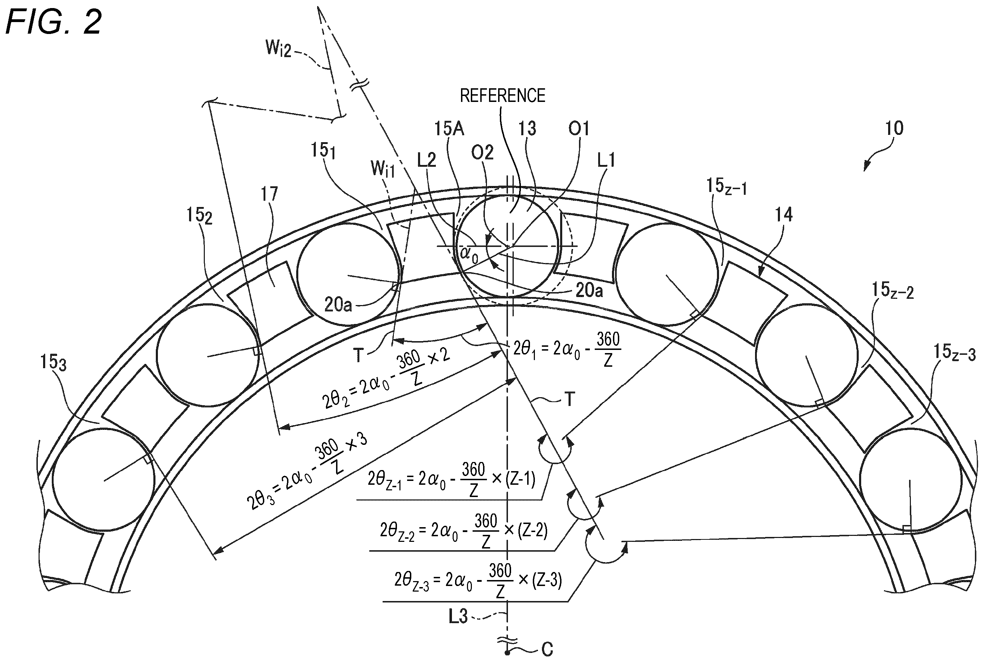

Further, referring to Fig. 2, between a plurality of pockets 15 spaced in the circumferential direction, when the cage 14 moves in the radial direction from a neutral position and two cylindrical rollers 13 move from neutral positions to a front side (leading side) and a rear side (lagging side) in a direction of orbital motion, and each cylindrical roller 13 comes into contact with the tip end portions 20a of the inner holding portions 20 on sides where the pocket surfaces are in a back-to-back relationship, a wedge $W_{in}$ (n is a positive integer starting from 1) is formed. At this time, an angle formed by a tangent T to the tip end portions 20a forms a wedge angle $2\theta_n$ (n is a positive integer starting from 1) between the plurality of pockets 15. In Fig. 2, only wedges $W_{i1}$ and $W_{i2}$ are shown.

That is, in Fig. 2, the wedge angle $2\theta_n$ is formed by the tangent T to the tip end portions 20a of the inner holding portions 20 on the sides where the pocket surfaces are in a back-to-back relationship of a pair of inner holding portions 20 in a predetermined pocket 15 (reference pocket 15A) and a pair of inner holding portions 20 in each pocket $15_n$ (n: 1, 2, ..., z-1 (z is the total number of pockets)) spaced apart in the circumferential direction with respect to the predetermined pocket 15A.

In the present embodiment, in order to prevent engagement of the wedges $W_{in}$ by the two pockets 15 having different phases, a design is made such that a positive minimum value $2\theta_{min}$ of wedge angles $2\theta_n$ of the plurality of wedges $W_{in}$ satisfies $\theta_{min} > \tan^{-1}(\mu)$. Here, $\mu$ is a friction coefficient between the cage 14 and the cylindrical roller 13.

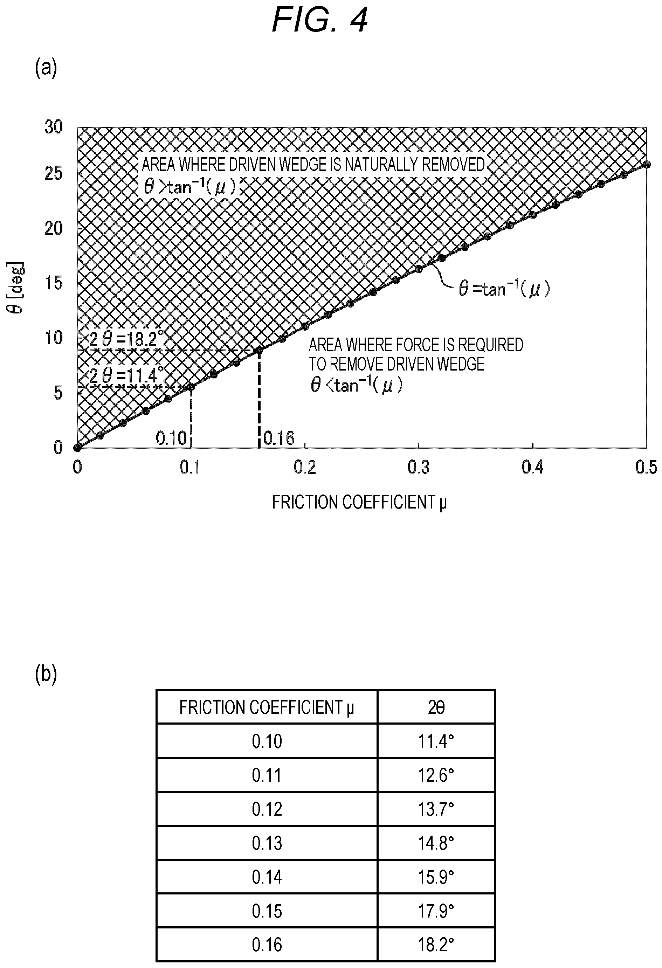

Therefore, for example, when the friction coefficient under oil lubrication in which the cage 14 is made of resin and the cylindrical roller 13 is made of iron is in a range of 0.10 or less, a design is made such that the positive minimum value $2\theta_{min}$ of the wedge angles $2\theta_n$ exceeds 11.4° based on a relationship in a graph in Fig. 4 to be described later.

Hereinafter, in order to prevent engagement of the wedges $W_{in}$ by the two pockets 15 having different phases, a reason why the design is made such that the positive minimum value $2\theta_{min}$ of the wedge angles $2\theta_n$ of the plurality of wedges $W_{in}$ satisfies $\theta_{min} > \tan^{-1}(\mu)$ will be described below.

As shown in Fig. 2, the wedge angle $2\theta_n$ formed between different pockets 15 is different for each combination of pockets 15, and in the cage 14 having the total number of pockets Z, the wedge angle $2\theta_n$ formed between the reference pocket 15A and an n-th pocket $15_n$ in a circumferential direction counterclockwise from the reference pocket 15A is represented by the following formula (1) using an angle $\alpha_0$ formed by a line L1 connecting a pocket diameter center (center of curvature of the inner holding portion 20) O1 and the tip end portion 20a of the inner holding portion 20 and a line L2 perpendicular to a symmetry line L3 of the pockets 15. The symmetry line L3 is a line that connects an intermediate position of the pocket 15 in the circumferential direction and a center C of the cage 14 along the radial direction.

$$2\theta_n = 2\alpha_0 - 360n/Z \qquad \text{Formula (1)}$$

where $1 \leq n \leq Z - 1$

Fig. 2 shows a state in which the cylindrical rollers 13 are arranged at equal intervals in the circumferential direction and the cage 14 is located at the neutral position. The neutral position refers to a case where a rotation center of the rolling bearing 10 and the center C of the cage 14 coincide with each other and the center O2 of the cylindrical roller 13 is on the symmetry line L3 of the pockets 15.

According to the formula (1), the wedge angle $2\theta_n$ formed between different pockets 15 varies for each pocket 15 at a pitch of -360/Z, and the wedge angle $2\theta_{min}$, which always has a positive minimum value, is present therein. A negative wedge angle $2\theta_n$ does not cause a problem since the negative wedge angle $2\theta_n$ is a direction in which a wedge is removed. In the present embodiment, a force generated by the wedge $W_{in}$ is reduced by designing the wedge angle $2\theta_n$ such that the positive minimum value $2\theta_{min}$ is as large as possible.

Specifically, for example, when $2\alpha_0 = 43$ and $Z = 18$, the wedge angles $2\theta_n$ of the pockets 15 are +23°, +3°, -17°, -37°, ... in an order of $2\theta_1$, $2\theta_2$, $2\theta_3$, $2\theta_4$, $2\theta_5$, .... At this time, $2\theta_2 = +3°$ forms a positive minimum wedge angle.

In order to increase the minimum wedge angle $2\theta_n$, adjustment such as changing the radius of curvature of the inner holding portion 20 in the pocket 15 is performed such that when $2\alpha_0 = 37°$, the wedge angles $2\theta_n$ of the pockets 15 are +17°, -3°, -23°, and -43°..., and the positive minimum value of the wedge angle $2\theta_{min}$ is $2\theta_1 = +17°$. Accordingly, by increasing the positive minimum value $2\theta_{min}$ of the wedge angle from +3° to +17°, the force caused by the wedge $W_{in}$ can be reduced.

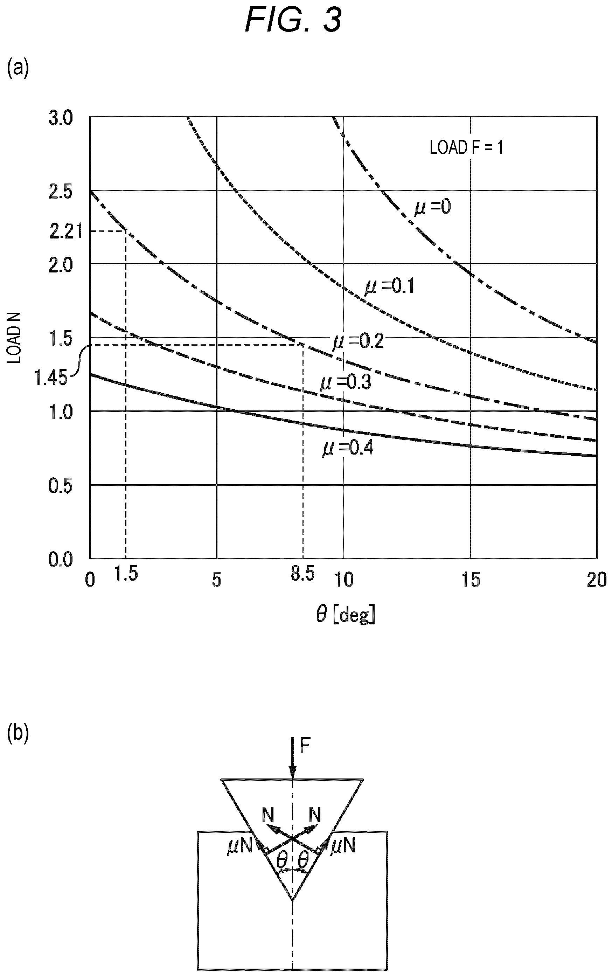

A relationship between the wedge angle and the force is represented by $F = 2 \times N \times (\mu \times \cos\theta + \sin\theta)$ using the friction coefficient $\mu$ in the drawing in which the wedge shown in (b) of Fig. 3 is driven into an object. F is a force for driving a wedge, $2\theta$ is a wedge angle, N is a reaction force from an object into which the wedge is driven, and the reaction force of N is a force that the object receives from the wedge.

A graph of (a) of Fig. 3 is obtained by setting F = 1N in the above calculation formula. For example, assuming that the wedge angle $2\theta$ is 3° ($\theta = 1.5°$) and 17° ($\theta = 8.5°$), a material for the cage 14 is resin, a material for the cylindrical roller 13 is iron, and the friction coefficient $\mu$ between the resin and the iron is 0.2, the force N generated by the wedge becomes N = 2.21 when the wedge angle $2\theta$ is 3° and N = 1.45 when the wedge angle $2\theta$ is 17°, and the force (N) generated by the wedge can be reduced by increasing the wedge angle $2\theta$. That is, a risk of damage to the cage 14 is reduced.

As shown in Fig. 4, whether the driven wedge will be removed naturally depends on a friction angle $\lambda$, which is determined by the relational expression $\lambda = \tan^{-1}(\mu)$ between the friction coefficient $\mu$ and the friction angle $\lambda$. In other words, if $\theta > \lambda = \tan^{-1}(\mu)$, no force is required to remove the wedge, and if $\theta < \lambda = \tan^{-1}(\mu)$, a force is required to remove the wedge. If the wedge is not naturally removed, the force caused by the wedge continues to be applied to the cage 14, which causes a risk of damage to the cage 14. Therefore, it is desirable to set the wedge angle to $2\theta$ so that the wedge can be removed naturally without a force for removing the wedge.

When the cage 14 is made of nylon resin and the cylindrical roller 13 is made of steel, the friction coefficient $\mu$ under oil lubrication is indicated by 0.10 to 0.16 (according to the literature "mechanical properties of plastic for processing and design"). According to the literature, the friction coefficient $\mu$ is about 0.16 under an extremely light load environment, and the friction coefficient tends to decrease to about 0.1 as the load increases. Considering a mode in which the column portion of the cage is damaged, it is assumed that a surface pressure that the column portion receives from the cylindrical roller 13 is high, and thus the friction coefficient $\mu$ at this time is presumed to be about 0.1. When the friction coefficient $\mu = 0.10$, the friction angle $\lambda$ is $\lambda = 5.7°$ based on the above equation. Accordingly, by setting the positive minimum value $2\theta_{min}$ of the wedge angles $2\theta_n$ to be more than 11.4° ($\theta_{min} = 5.7°$), even when the cage and the cylindrical roller 13 are engaged with each other in a wedge shape, the wedge is naturally removed, and thus a load of force due to the wedge does not continue, and damage to the cage can be reduced.

When the friction coefficient $\mu = 0.16$, the friction angle $\lambda = 9.1°$, so that a greater effect can be obtained by setting the positive minimum value $2\theta_{min}$ of the wedge angle $2\theta$ to 18.2° ($\theta_{min} = 9.1°$) or more. Accordingly, damage to the cage 14 caused due to a wedge action between pockets having different phases can be prevented.

In the present embodiment, a shape of the inner holding portion 20 is Gothic arch to control the wedge angle $2\theta_n$ between the plurality of pockets 15. This is because, in designing the cage 14 and the rolling bearing 10, the wedge angle $2\theta_n$ between the pockets 15 can be freely controlled without being subjected to functional restrictions.

For example, as another design method of controlling the wedge angle $2\theta_n$ between the pockets 15, there are the following (A) to (D), all of which have the following problems and restrictions.

(A) Change the pocket diameter using a non-Gothic arch.

When it is considered to change the pocket diameter using the non-Gothic arch, increasing the pocket diameter increases a gap in the circumferential direction between the pocket and the rolling element, resulting in problems such as cage noise due to a collision between the pocket and the rolling element, and a decrease in strength due to a decrease in a wall thickness of a column of the cage.

(B) Change an inner diameter of the cage.

When the inner diameter of the cage is reduced, there is a concern of impact with a flange of the inner ring at the time of assembling the bearing, and thus there is a limit in an adjustment range.

When the inner diameter of the cage is increased, an opening width of the holding portion is increased, and the wedge is likely to be engaged in a single pocket, and further, the cage becomes thinner in the radial direction, resulting in a decrease in strength.

(C) Change the number of rolling elements (the number of pockets).

When the number of rolling elements is forcibly increased, the column portion of the cage become thin, and the strength decreases. On the other hand, when the number of rolling elements is reduced, a basic rated load of the bearing is reduced. The number of rolling elements is a parameter that affects the basic rated load of the bearing, and thus cannot be easily changed.

(D) Shift PCD of the pocket (the center of curvature of the holding portion) in the radial direction.

When the PCD of the pocket is shifted toward the outer diameter side, a diametrical gap between the pocket of the cage and the rolling element is eliminated, and thus there is a limit in the adjustment range. On the other hand, when the PCD of the pocket is shifted to the inner diameter side, the opening width of the holding portion is increased, and the wedge angle is reduced, so that a wedge is easily engaged in a single pocket.

Even when the angle of the wedge between the pockets is controlled using the Gothic arch, the opening width of the holding portion is increased by increasing the radius of curvature $R_1$ of the holding portion, so that a wedge is likely to be engaged in the single pocket. However, as compared with the case where the opening width of the holding portion is increased by the above-described measures such as (B) change the inner diameter of the cage and (D) shift the PCD of the pocket in the radial direction, the opening width of the pocket is necessarily narrower in the case of the Gothic arch, so that a wedge is less likely to be engaged in the single pocket.

Hereinafter, when the wedge angle between different pockets is controlled using a Gothic arch according to the present embodiment, compared with a case where the wedge angle is controlled using a non-Gothic arch, it will be described that an opening width of the holding portion is reduced, that is, a wedge is less likely to be engaged in the single pocket.

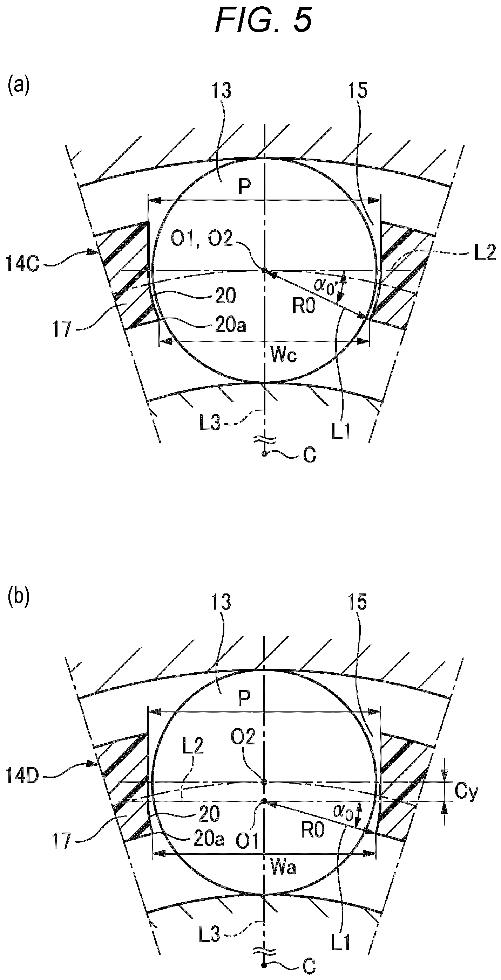

When a cage 14C shown in (a) of Fig. 5 is in a neutral position, in the inner holding portion 20 in which the pocket diameter center O1 (arc center of the inner holding portion) and the roller center O2 coincide with each other in a design in the related art, $\alpha_0$, which is a parameter in the formula (1) for determining the wedge angle $2\theta_n$ in the formula (1), is formed by the line L1 connecting the pocket diameter center O1 and the tip end portion 20a of the inner holding portion 20 and the line L2 perpendicular to the symmetry line L3 of the pockets 15. The opening width Wc of the inner holding portion 20 at this time is $Wc = 2R_0 \times \cos\alpha_0$. A pocket width P of the cage 14C is $P = 2 \times R_0$.

Here, the number Z of the cylindrical rollers 13 is a parameter that greatly affects a load loading capability of the bearing, and it is difficult to change the number Z unless there is a particular reason. If the wedge angle $2\theta_n$ between different pockets 15 is changed without changing the number Z of cylindrical rollers 13, it is necessary to change a value of $\alpha_0$.

In another cage 14D shown in (b) of Fig. 5, $\alpha_0$ is changed to $\alpha_0$ by shifting the pocket diameter center O1 in the radial direction by Cy without changing the radius of curvature $R_0$ of the pockets 15, that is, the wedge angle $2\theta_n$ between the pockets 15 is changed. An opening width $W_a$ of the inner holding portion 20 at this time is $W_a = 2R_0 \times \cos\alpha_0$.

On the other hand, in the cage 14 according to the present embodiment shown in (b) of Fig. 1, the pocket diameter is $R_1$ (where $R_0 < R_1$), and the pocket diameter center O1 is shifted by $C_x$ on an axis of the line L2 to form a Gothic arch, and an angle formed by the line L1 connecting the pocket diameter center O1 and the tip end portion 20a of the inner holding portion 20 and the line L2 perpendicular to the symmetry line L3 of the pockets 15 is $\alpha_0$. At this time, an opening width $W_b$ of the inner holding portion 20 is $W_b = 2 \times (R_1 \times \cos\alpha_0 - R_1 + P/2)$.

Accordingly, a difference $W_a - W_b$ between the pocket opening widths $W_a$ and $W_b$ is $W_a - W_b = 2 \times (R_1 - R_0) \times (1 - \cos\alpha_0)$. Since $R_1 - R_0 > 0$ and $(1 - \cos\alpha_0) > 0$, the difference between the pocket opening widths $W_a - W_b > 0$ is obtained. In other words, $W_a > W_b$ is always satisfied, and even when the wedge angle $2\theta_n$ formed between different pockets 15 is the same, the opening width $W_b$ of the inner holding portion 20 can be made smaller in a case of a Gothic arch design. That is, engagement of the wedge in the single pocket 15 can be reduced.

As described above, of the pair of inner holding portions 20 in different pockets, the wedge angle $2\theta_n$ of the plurality of wedges $W_{in}$ is implemented by the tangents T to the tip end portions 20a of the inner holding portions 20 on the sides where the pocket surfaces are in a back-to-back relationship with each other, and when the friction coefficient between the cage 14 and the cylindrical rollers 13 is $\mu$, by making the positive minimum value $2\theta_{min}$ among the wedge angle $2\theta_n$ of a plurality of wedges satisfy $\theta_{min} > \tan^{-1}(\mu)$, a risk of damage to the cage 14 can be significantly reduced.

Therefore, the rolling bearing according to the present embodiment can be suitably used, in particular, as a bearing that may be operated under an operation condition that a negative radial clearance is over an entire circumference, for example, a cylindrical roller bearing that supports a main shaft of a machine tool.

In the present embodiment, when a wedge angle formed between different pockets is controlled, the inner holding portions 20 opposed to each other in the circumferential direction in the pockets are formed in a Gothic arch shape formed by extending and intersecting arcs of each other, and damage to the column portion 17 of the cage 14 due to a wedge action formed in a single pocket can be prevented.

(Second Embodiment)

Next, the rolling bearing cage according to the second embodiment and a rolling bearing including the rolling bearing cage will be described.

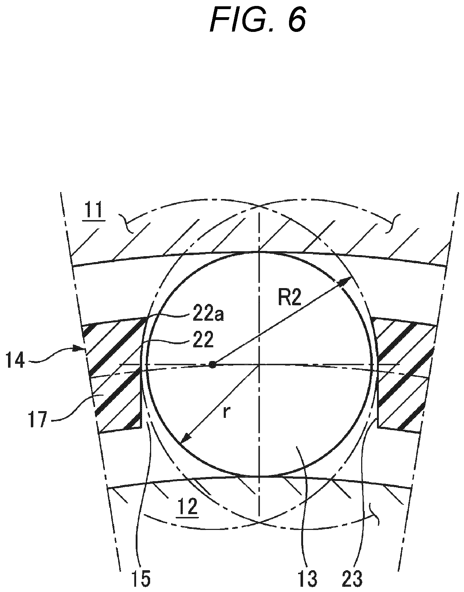

In the rolling element guide cage 14 according to the present embodiment, as shown in Fig. 6, an outer holding portion 22 is formed on an outer diameter side of the pocket 15 instead of the inner holding portion 20 formed on the inner diameter side of the pocket 15.

As shown in Fig. 6, the side surfaces of the column portions 17 of the cage 14 opposed to each other in the circumferential direction have the outer holding portion 22 that is curved toward the outer diameter side of the pockets 15, and the inner diameter sides from the outer holding portion 22 are planes 23 parallel to each other.

Accordingly, when the cage 14 and the cylindrical roller 13 move relative to each other in the radial direction, the cylindrical roller 13 comes into contact with a tip end portion 22a of the outer holding portion 22 that is opposed to the outer diameter side of the pocket 15, thereby restricting movement of the cage 14 in the radial direction.

When the cross section of the cage 14 is viewed in the axial direction, the outer holding portion 22 has a radius of curvature $R_2$ larger than the radius r of the cylindrical roller 13, and the outer holding portions 22 opposed to each other in the circumferential direction are extended and cross arcs of each other to form a Gothic arch shape.

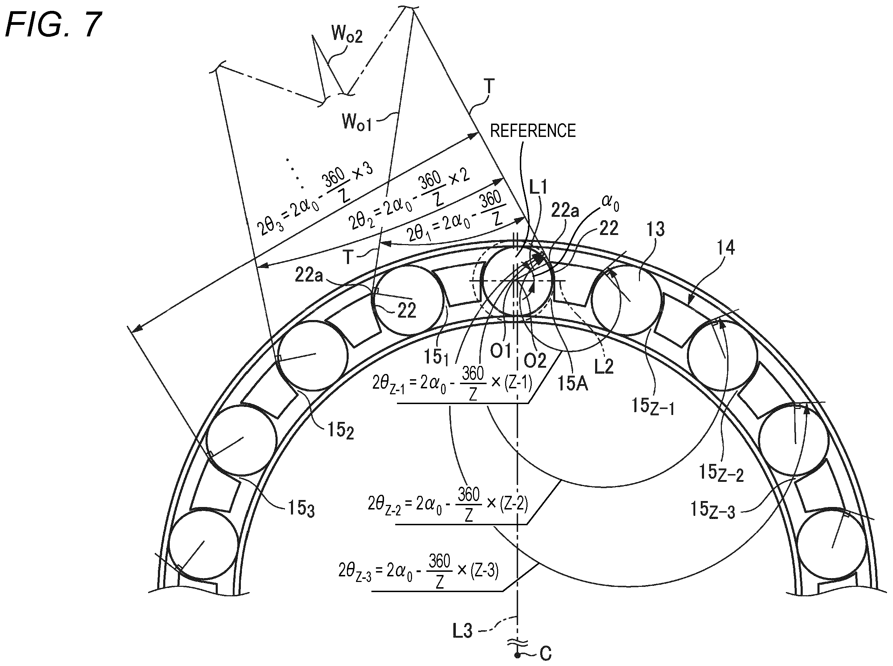

Fig. 7 is a side view showing the wedge angle $2\theta_n$ between the pockets 15 spaced apart in the circumferential direction in the cage 14 in which the outer holding portion 22 is formed on the outer diameter side of the pockets 15. When the outer holding portion 22 is formed on the outer diameter side of the pocket 15, the wedge angle $2\theta_n$ is defined by an angle formed by tangents T to the tip end portions 22a of the outer holding portions 22 and 22 on sides where the pocket surfaces face each other.

In a case of outer holding, the wedge angles $2\theta_n$ formed between different pockets 15 are different for each combination of pockets 15. In the cage 14 having the total number of pockets Z, the angle $2\theta_n$ of the wedge formed between the reference pocket 15A and an n-th pocket $15_n$ from the reference pocket 15A toward an adjacent side satisfies the formula (1) described in Fig. 2, that is, $2\theta_n = 2\alpha_0 - 360n/Z$, using the angle $\alpha_0$ formed by the line L1 connecting the pocket diameter center O1 and the tip end portion 22a of the outer holding portion 22 and the line L2 perpendicular to the symmetry line L3 of the pockets 15.

Accordingly, as in a case of the inner holding portion 20, when the friction coefficient between the cage 14 and the cylindrical rollers 13 is $\mu$, the positive minimum value $2\theta_{min}$ of the plurality of wedge angles $2\theta_n$ is set to satisfy $\theta_{min} > \tan^{-1}(\mu)$, and a force generated by a wedge can be reduced, reducing a risk of damage to the cage 14.

In the present embodiment, when a wedge angle formed between different pockets is controlled, the outer holding portions 22 opposed to each other in the circumferential direction in the pockets are formed in a Gothic arch shape by extending and intersecting arcs of each other, and damage to the column portion of the cage due to a wedge action formed in a single pocket can be prevented.

Other configurations and operations are similar as those of the first embodiment.

(Third Embodiment)

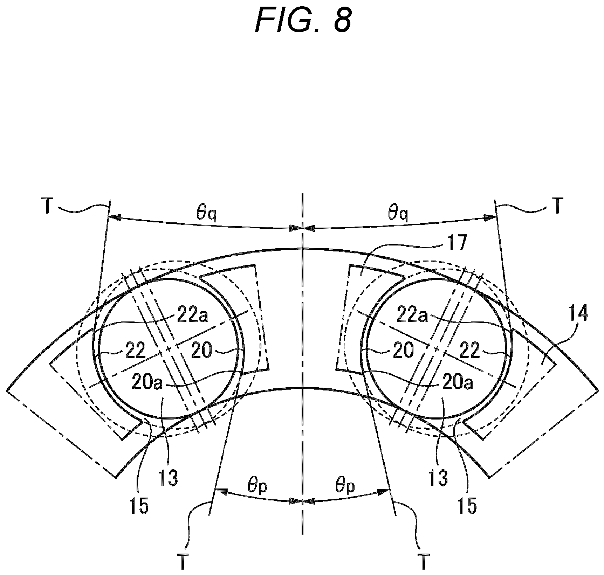

Next, the rolling bearing cage according to the third embodiment and a rolling bearing including the rolling bearing cage will be described. In the present embodiment, as shown in Fig. 8, the cage 14 is a both-held cage having both the inner holding portion 20 and the outer holding portion 22 provided at the same time.

In this cage 14 as well, by forming the inner holding portion 20 and the outer holding portion 22 using a Gothic arch and setting the positive minimum value $2\theta_{min}$ of the wedge angle $2\theta_n$ between different pockets 15 such that $\theta_{min} > \tan^{-1}(\mu)$ is satisfied for both the inner holding portion 20 and the outer holding portion 22, a force generated by a wedge can be reduced. Since an engagement force by the wedge cannot be continued, a risk of damage to the cage 14 is reduced.

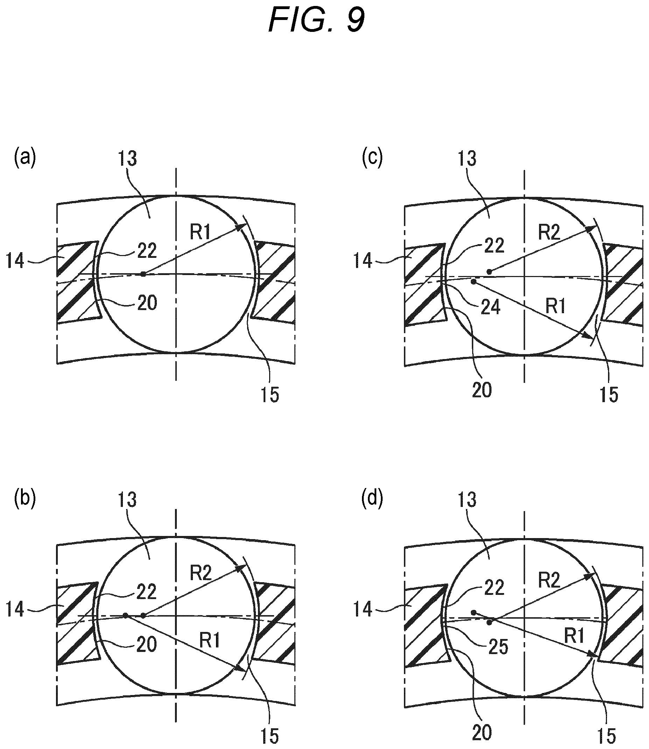

As shown in (a) of Fig. 9, the inner holding portion 20 and the outer holding portion 22 may be continuously formed in a single arc. As shown in (b) of Fig. 9, the radius of curvature $R_1$ of the inner holding portion 20 and the radius of curvature $R_2$ of the outer holding portion 22 may be different, and both radii may be connected by a common tangent. As shown in (c) of Fig. 9, the radius of curvature $R_1$ of the inner holding portion 20 and the radius of curvature $R_2$ of the outer holding portion 22 may be different, and the inner holding portion 20 and the outer holding portion 22 may be connected by a common straight line 24. As shown in (d) of Fig. 9, the radius of curvature $R_1$ of the inner holding portion 20 and the radius of curvature $R_2$ of the outer holding portion 22 may be different, and the inner holding portion 20 and the outer holding portion 22 may intersect at an intersection 25 to form double holding.

The present invention is not limited to the above embodiment, and can be appropriately modified, improved, or the like.

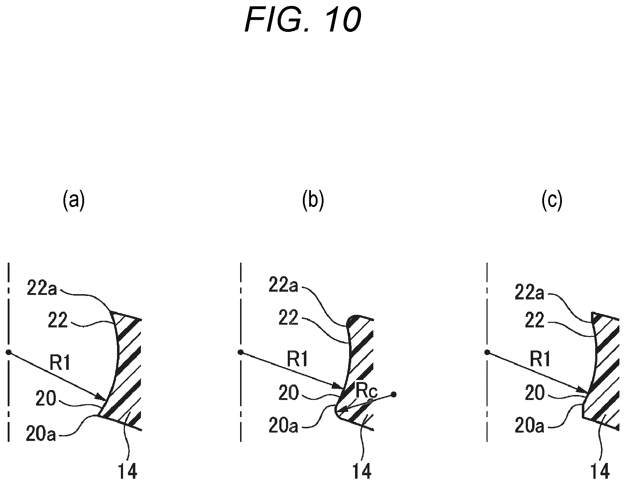

For example, as shown in (a) to (c) of Fig. 10, the tip end portion 20a of the inner holding portion 20 and the tip end portion 22a of the outer holding portion 22 may be end point portions of arcs with radii of curvature $R_1$ and $R_2$ forming the holding portions 20 and 22.

Specifically, as shown in (a) of Fig. 10, an intersection between an inner circumferential surface of the cage 14 and the inner holding portion 20 and an intersection between an outer circumferential surface of the cage 14 and the outer holding portion 22 may be tip end portions 20a and 22a, respectively. As shown in (b) of Fig. 10, when an intersection between the inner circumferential surface of the cage 14 and the inner holding portion 20 and an intersection between the outer circumferential surface of the cage 14 and the outer holding portion 22 are round chamfering, connection points of the holding portions 20 and 22 and the round chamfering may be the tip end portions 20a and 22a, respectively. As shown in (c) of Fig. 10, when an intersection between the inner circumferential surface of the cage 14 and the inner holding portion 20 and an intersection between the outer circumferential surface of the cage 14 and the outer holding portion 22 are chamfered with flat surfaces, connection points of the holding portions 20 and 22 and the flat surfaces may be the tip end portions 20a and 22a, respectively.

In the above embodiment, the cylindrical roller cage and the cylindrical roller bearing in which the rolling elements are cylindrical rollers have been described, but the present invention is also applicable to a ball bearing cage and a ball bearing in which the rolling elements are balls.

As described above, the following matters are disclosed in the present specification.

(1) A rolling bearing cage having a plurality of pockets for holding a plurality of rolling elements arranged between an outer ring raceway formed on an inner circumferential surface of an outer ring and an inner ring raceway formed on an outer circumferential surface of an inner ring in a rollable manner, the rolling bearing cage being guided by the plurality of rolling elements, in which

holding portions opposed to each other in a circumferential direction in the pockets are formed into a Gothic arch shape by extending and intersecting arcs of each other, and a plurality of wedges are defined by tangents to tip end portions of a holding portion in a predetermined pocket and holding portions in the pockets spaced apart in the circumferential direction with respect to the predetermined pocket,
when the holding portions are formed on an inner diameter side of the pocket and internally held, the wedge is defined by tangents to the tip end portions of the holding portions on sides where pocket surfaces are in a back-to-back relationship,
when the holding portions are formed on an outer diameter side of the pocket and externally held, the wedge is defined by tangents to the tip end portions of the holding portions on sides where pocket surfaces face each other, and when a friction coefficient between the cage and the rolling elements is $\mu$, a positive minimum value $2\theta_{min}$ of wedge angles $2\theta$ of the plurality of wedges satisfies $\theta_{min} > \tan^{-1}(\mu)$.

According to this configuration, it is possible to prevent damage to a column portion of the cage due to a wedge action formed between two pockets having different phases, and it is also possible to prevent damage to the column portion of the cage due to a wedge action formed in a single pocket.

(2) The rolling bearing cage according to (1), in which
a positive minimum value $2\theta_{min}$ of the wedge angles $2\theta$ of the plurality of wedges exceeds 11.4°.

According to this configuration, when the friction coefficient under oil lubrication in which the cage is made of resin and the rolling element is made of iron is in a range of 0.10 or less, it is possible to prevent engagement of a wedge due to two pockets having different phases, and it is possible to prevent damage to the column portion of the cage.

(3) The rolling bearing cage according to (1) or (2), in which
a radius of curvature of an arc of the holding portion is larger than a radius of the rolling element.

According to this configuration, the holding portions opposed to each other in the circumferential direction in the pockets can be formed in a Gothic arch shape.

(4) The rolling bearing cage according to any one of (1) to (3), in which
the rolling bearing cage is for a cylindrical roller bearing.

According to this configuration, when the rolling bearing cage is used as a cylindrical roller bearing cage, damage to the column portion of the cage can be prevented.

(5) The rolling bearing cage according to any one of (1) to (4), in which
the rolling bearing cage is used under an operation condition that a negative radial clearance is over an entire circumference.

According to this configuration, even when the cage is used under the condition that a negative radial clearance is over the entire circumference, there is no possibility that the column portion of the cage is damaged.

(6) A rolling bearing using the rolling bearing cage according to any one of (1) to (5).

According to this configuration, there is no possibility that the cage is damaged, and a highly reliable rolling bearing is obtained.

(7) The rolling bearing according to (5), in which
the rolling bearing supports a main shaft of a machine tool.

According to this configuration, the main shaft of the machine tool can be supported by the highly reliable rolling bearing.

(8) A method of designing a rolling bearing cage having a plurality of pockets for holding a plurality of rolling elements arranged between an outer ring raceway formed on an inner circumferential surface of an outer ring and an inner ring raceway formed on an outer circumferential surface of an inner ring **in** a rollable manner, the rolling bearing cage being guided by the plurality of rolling elements, **in** which
a design is made such that

a plurality of wedges are defined by tangents to tip end portions of holding portions opposed to each other **in** a circumferential direction in the pockets and holding portions in the pockets spaced apart **in** the circumferential direction with respect to the predetermined pocket,
when the holding portions are formed on an inner diameter side of the pocket and internally held, the wedge is defined by tangents to the tip end portions of the holding portions on sides where pocket surfaces are **in** a back-to-back relationship,
when the holding portions are formed on an outer diameter side of the pocket and externally held, the wedge is defined by tangents to the tip end portions of the holding portions on sides where pocket surfaces face each other, and
when a friction coefficient between the cage and the rolling elements is $\mu$, a positive minimum value $2\theta_{min}$ of wedge angles $2\theta_n$ of the plurality of wedges satisfies $\theta_{min} > \tan^{-1}(\mu)$.

According to this configuration, it is possible to design a cage capable of preventing damage to the column portion of the cage due to a wedge action formed between two pockets having different phases, and preventing damage to the column portion of the cage due to a wedge action formed in a single pocket.

Although the embodiment and the variation thereof are described above with reference to the drawings, it is needless to mention that the present invention is not limited to these examples.

The invention is defined by the appended claims.

The present application is based on a Japanese patent application (No. 2022-044005) filed on March 18, 2022.

REFERENCE SIGNS LIST

10 rolling bearing
11 outer ring
11a outer ring raceway
12 inner ring
12a inner ring raceway
13 cylindrical roller (rolling element)
14 cage (rolling bearing cage and cylindrical roller bearing cage)
15, 15A, 15$_n$ pocket
20 inner holding portion (holding portion)
20a, 22a tip end portion
22 outer holding portion (holding portion)
$R_1$ radius of curvature of inner holding portion
$R_2$ radius of curvature of outer holding portion
r radius of rolling element
T tangent to tip end portion
$2\theta_n$ wedge angle

**Claims**

1. A rolling bearing cage (14) having a plurality of pockets (15) for holding a plurality of rolling elements (13) arranged between an outer ring raceway (11a) formed on an inner circumferential surface of an outer ring (11) and an inner ring raceway (12a) formed on an outer circumferential surface of an inner ring (12) in a rollable manner, the rolling bearing cage (14) being guided by the plurality of rolling elements (13), wherein

holding portions (20) opposed to each other in a circumferential direction in the pockets (15) are formed into a Gothic arch shape by extending and intersecting arcs of each other, and
a plurality of wedges ($W_{in}$) are defined by tangents to tip end portions of a holding portion (20) in a predetermined pocket (15A) and holding portions (20) in the pockets (15$_n$) spaced apart in the circumferential direction with respect to the predetermined pocket (15A),
when the holding portions (20) are formed on an inner diameter side of the pocket (15) and internally held, the wedge is defined by tangents to the tip end portions (20a) of the holding portions (20) on sides where pocket surfaces are in a back-to-back relationship,
when the holding portions (20) are formed on an outer diameter side of the pocket (15) and externally held, the wedge is defined by tangents to the tip end portions (20a) of the holding portions (20) on sides where pocket surfaces face each other,
**characterized in that** when
a friction coefficient between the cage (14) and the rolling elements (13) is $\mu$, a positive minimum value $2\theta_{min}$ of wedge angles $2\theta_n$ of the plurality of wedges satisfies $\theta_{min} > \tan^{-1}(\mu)$.

2. The rolling bearing cage according to claim 1, wherein
a positive minimum value $2\theta_{min}$ of the wedge angles $2\theta_n$ of the plurality of wedges exceeds 11.4°.

**3.** The rolling bearing cage according to claim 1 or 2, wherein

a radius of curvature of an arc of the holding portion is larger than a radius of the rolling element.

**4.** The rolling bearing cage according to any one of claims 1 to 3, wherein

the rolling bearing cage is a cylindrical roller bearing cage.

**5.** The rolling bearing cage according to any one of claims 1 to 4, wherein the rolling bearing cage is configured to be used under an operation condition that a negative radial clearance is over an entire circumference.

**6.** A rolling bearing comprising the rolling bearing cage according to any one of claims 1 to 5.

**7.** A machine tool comprising a main shaft supported by a rolling bearing according to claim 6.

**8.** A method of designing a rolling bearing cage (14) having a plurality of pockets (15) for holding a plurality of rolling elements (13) arranged between an outer ring raceway (11a) formed on an inner circumferential surface of an outer ring (11) and an inner ring raceway (12a) formed on an outer circumferential surface of an inner ring (11) in a rollable manner, the rolling bearing cage (14) being guided by the plurality of rolling elements (13), wherein

a design is made such that

a plurality of wedges ($W_{in}$) are defined by tangents to tip end portions (20a) of holding portions (20) opposed to each other in a circumferential direction in the pockets (15) and holding portions (20) in the pockets ($15_n$) spaced apart in the circumferential direction with respect to a predetermined pocket (15A),

when the holding portions (20) are formed on an inner diameter side of the pocket (15) and internally held, the wedge is defined by tangents to the tip end portions (20a) of the holding portions (20) on sides where pocket surfaces are in a back-to-back relationship,

when the holding portions (20) are formed on an outer diameter side of the pocket (15) and externally held, the wedge is defined by tangents to the tip end portions (20a) of the holding portions (20) on sides where pocket surfaces face each other, **characterized in that**

when a friction coefficient between the cage and the rolling elements is $\mu$, a positive minimum value $2\theta_{min}$ of wedge angles $2\theta_n$ of the plurality of wedges satisfies $\theta_{min} > \tan^{-1}(\mu)$.

**Patentansprüche**

**1.** Wälzlagerkäfig (14) mit einer Vielzahl von Taschen (15), die dazu dienen, eine Vielzahl von Wälzkörpern (13), die zwischen einer Außenring-Laufbahn (11a), die an einer Innenumfangsfläche eines Außenrings (11) ausgebildet ist, und einer Innenring-Laufbahn (12a), die an einer Außenumfangsfläche eines Innenrings (12) ausgebildet ist, so aufzunehmen, dass sie rollen können, wobei der Wälzlagerkäfig (14) von der Vielzahl von Wälzkörpern (13) geführt wird, wobei

Aufnahmeabschnitte (20), die einander in einer Umfangsrichtung in den Taschen (15) gegenüberliegen, durch verlängerte und einander schneidende Bögen in einer Spitzbogenform ausgebildet werden, und
eine Vielzahl von Keilen ($W_{in}$) durch Tangenten an vorderen Endabschnitten eines Aufnahmeabschnitts (20) in einer vorgegebenen Tasche (15A) und Aufnahmeabschnitte (20) in den Taschen ($15_n$) gebildet werden, die in Bezug auf die vorgegebene Tasche (15A) in der Umfangsrichtung beabstandet sind,
wenn die Aufnahmeabschnitte (20) an einer Innendurchmesserseite der Tasche (15) ausgebildet und innen aufgenommen sind, der Keil durch Tangenten an den vorderen Endabschnitten (20a) der Aufnahmeabschnitte (20) an Seiten gebildet wird, an denen sich Taschen-Flächen in einer Rücken-an-Rücken-Beziehung befinden,
wenn die Aufnahmeabschnitte (20) an einer Außendurchmesserseite der Tasche (15) ausgebildet und außen aufgenommen sind, der Keil durch Tangenten an den vorderen Endabschnitten (20a) der Aufnahmeabschnitte (20) an Seiten gebildet wird, an denen Taschen-Flächen einander gegenüberliegen,
**dadurch gekennzeichnet, dass,**
wenn ein Reibungskoeffizient zwischen dem Käfig (14) und den Wälzkörpern (13) $\mu$ ist, für einen positiven Minimalwert $2\theta_{min}$ von Keil-Winkeln $2\theta_n$ der Vielzahl von Keilen $\theta_{min} > \tan^{-1}(\mu)$ gilt.

**2.** Wälzlagerkäfig nach Anspruch 1, wobei
ein positiver Minimalwert $2\theta_{min}$ von Keil-Winkeln $2\theta_n$ der Vielzahl von Keilen 11,4° überschreitet.

**3.** Wälzlagerkäfig nach Anspruch 1 oder 2, wobei
ein Krümmungsradius eines Bogens des Aufnahmeabschnitts größer ist als ein Radius des Wälzkörpers.

**4.** Wälzlagerkäfig nach einem der Ansprüche 1 bis 3, wobei

der Wälzlagerkäfig ein Käfig eines Zylinderrollenlagers ist.

5. Wälzlagerkäfig nach einem der Ansprüche 1 bis 4, wobei der Wälzlagerkäfig so ausgeführt ist, dass er unter Betriebsbedingungen eingesetzt wird, bei denen über einen gesamten Umfang eine negative Radialluft vorliegt.

6. Wälzlager, das den Wälzlagerkäfig nach einem der Ansprüche 1 bis 5 umfasst.

7. Werkzeugmaschine, die eine Hauptwelle umfasst, die über ein Wälzlager nach Anspruch 6 gelagert ist.

8. Verfahren zum Konstruieren eines Wälzlagerkäfigs (14) mit einer Vielzahl von Taschen (15), die dazu dienen, eine Vielzahl von Wälzkörpern (13), die zwischen einer Außenring-Laufbahn (11a), die an einer Innenumfangsfläche eines Außenrings (11) ausgebildet ist, und einer Innenring-Laufbahn (12a), die an einer Außenumfangsfläche eines Innenrings (12) ausgebildet ist, so aufzunehmen, dass sie rollen können, wobei der Wälzlagerkäfig (14) von der Vielzahl von Wälzkörpern (13) geführt wird, wobei die Konstruktion so ausgeführt wird, dass

eine Vielzahl von Keilen ($W_{in}$) durch Tangenten an vorderen Endabschnitten eines Aufnahmeabschnitts (20) in einer vorgegebenen Tasche (15A) und Aufnahmeabschnitte (20) in den Taschen ($15_n$) gebildet werden, die in Bezug auf die vorgegebene Tasche (15A) in der Umfangsrichtung beabstandet sind, wenn die Aufnahmeabschnitte (20) an einer Innendurchmesserseite der Tasche (15) ausgebildet und innen aufgenommen sind, der Keil durch Tangenten an den vorderen Endabschnitten (20a) der Aufnahmeabschnitte (20) an Seiten gebildet wird, an denen sich Taschen-Flächen in einer Rücken-an-Rücken-Beziehung befinden, wenn die Aufnahmeabschnitte (20) an einer Außendurchmesserseite der Tasche (15) ausgebildet sind und außen aufgenommen sind, der Keil durch Tangenten an den vorderen Endabschnitten (20a) der Aufnahmeabschnitte (20) an Seiten gebildet wird, an denen Taschen-Flächen einander gegenüberliegen, **dadurch gekennzeichnet, dass,** wenn ein Reibungskoeffizient zwischen dem Käfig (14) und den Wälzkörpern (13) $\mu$ ist, für einen positiven Minimalwert $2\theta_{min}$ von Keil-Winkeln $2\theta_n$ der Vielzahl von Keilen $\theta_{min} > \tan^{-1}(\mu)$ gilt.

**Revendications**

1. Cage de roulement (14) comportant une pluralité de poches (15) destinées à recevoir une pluralité d'éléments roulants (13) agencés de manière roulante entre un chemin de roulement de bague externe (11a) formé sur une surface circonférentielle interne d'une bague externe (11) et un chemin de roulement de bague interne (12a) formé sur une surface circonférentielle externe d'une bague interne (12), la cage de roulement (14) étant guidée par la pluralité d'éléments roulants (13), dans laquelle

les portions de maintien (20) opposées entre elles en direction circonférentielle dans les poches (15) présentent une forme d'arc gothique par des arcs qui s'étendent et s'intersectent entre eux, et une pluralité de coins ($W_{in}$) sont définis par des tangentes aux portions d'extrémité d'une portion de maintien (20) dans une poche prédéterminée (15A) et des portions de maintien (20) dans les poches ($15_n$) espacées en direction circonférentielle par rapport à la poche prédéterminée (15A), quand les portions de maintien (20) sont formées sur un côté diamètre interne de la poche (15) et maintenues intérieurement, le coin est défini par des tangentes aux portions d'extrémité (20a) des portions de maintien (20) sur les côtés où les surfaces de poche sont dos à dos, quand les portions de maintien (20) sont formées sur un côté diamètre externe de la poche (15) et maintenues extérieurement, le coin est défini par des tangentes aux portions d'extrémité (20a) des portions de maintien (20) sur les côtés où les surfaces de poche se font face, **caractérisée en ce que**, quand le coefficient de frottement entre la cage (14) et les éléments roulants (13) est $\mu$, la valeur minimale positive $2\theta_{min}$ des angles de coin $2\theta_n$ de la pluralité de coins satisfait $\theta_{min} > \tan^{-1}(\mu)$.

2. Cage de roulement selon la revendication 1, dans laquelle la valeur minimale positive $2\theta_{min}$ des angles de coin $2\theta_n$ de la pluralité de coins dépasse 11,4°.

3. Cage de roulement selon la revendication 1 ou 2, dans laquelle le rayon de courbure d'un arc de la portion de maintien est supérieur au rayon de l'élément roulant.

4. Cage de roulement selon l'une quelconque des revendications 1 à 3, dans laquelle la cage de roulement est une cage de roulement à rouleaux cylindriques.

5. Cage de roulement selon l'une quelconque des revendications 1 à 4, dans laquelle
la cage de roulement est configurée pour être utilisée dans une condition de fonctionnement où un jeu radial négatif est présent sur toute la circonférence.

6. Roulement comprenant la cage de roulement selon l'une quelconque des revendications 1 à 5.

7. Machine-outil comprenant un arbre principal supporté par un roulement selon la revendication 6.

8. Procédé de conception d'une cage de roulement (14) comportant une pluralité de poches (15) destinées à recevoir une pluralité d'éléments roulants (13) agencés de manière roulante entre un chemin de roulement de bague externe (11a) formé sur une surface circonférentielle interne d'une bague externe (11) et un chemin de roulement de bague interne (12a) formé sur une surface circonférentielle externe d'une bague interne (11), la cage de roulement (14) étant guidée par la pluralité d'éléments roulants (13), dans lequel

une conception est réalisée de sorte qu'une pluralité de coins ($W_{in}$) sont définis par des tangentes aux portions d'extrémité (20a) de portions de maintien (20) opposées entre elles en direction circonférentielle dans les poches (15) et de portions de maintien (20) dans les poches ($15_n$) espacées en direction circonférentielle par rapport à une poche prédéterminée (15A),
quand les portions de maintien (20) sont formées sur un côté diamètre interne de la poche (15) et maintenues intérieurement, le coin est défini par des tangentes aux portions d'extrémité (20a) des portions de maintien (20) sur les côtés où les surfaces de poche sont dos à dos,
quand les portions de maintien (20) sont formées sur un côté diamètre externe de la poche (15) et maintenues extérieurement, le coin est défini par des tangentes aux portions d'extrémité (20a) des portions de maintien (20) sur les côtés où les surfaces de poche se font face,
**caractérisé en ce que**
quand le coefficient de frottement entre la cage et les éléments roulants est $\mu$, la valeur minimale positive $2\theta_{min}$ des angles de coin 26, de la pluralité de coins satisfait $\theta_{min} > \tan^{-1}(\mu)$.

# FIG. 1

(a)

(b)

FIG. 2

$2\theta_1 = 2\alpha_0 - \dfrac{360}{Z}$

$2\theta_2 = 2\alpha_0 - \dfrac{360}{Z} \times 2$

$2\theta_3 = 2\alpha_0 - \dfrac{360}{Z} \times 3$

$2\theta_{Z-1} = 2\alpha_0 - \dfrac{360}{Z} \times (Z-1)$

$2\theta_{Z-2} = 2\alpha_0 - \dfrac{360}{Z} \times (Z-2)$

$2\theta_{Z-3} = 2\alpha_0 - \dfrac{360}{Z} \times (Z-3)$

REFERENCE

EP 4 495 445 B1

14

# FIG. 3

(a)

(b)

# FIG. 4

(a)

(b)

| FRICTION COEFFICIENT μ | 2θ |
|---|---|
| 0.10 | 11.4° |
| 0.11 | 12.6° |
| 0.12 | 13.7° |
| 0.13 | 14.8° |
| 0.14 | 15.9° |
| 0.15 | 17.9° |
| 0.16 | 18.2° |

# FIG. 5

(a)

(b)

# FIG. 6

FIG. 7

EP 4 495 445 B1

*FIG. 8*

# FIG. 9

(a)

(b)

(c)

(d)

# FIG. 10

(a)  (b)  (c)

# FIG. 11

(a)

(b)

# FIG. 12

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019116976 A
- JP 2005069282 A
- JP 5870563 B
- JP 2022044005 A